# EUROPEAN PATENT SPECIFICATION

(11) **EP 2 234 823 B1**
(45) Date of publication and mention of the grant of the patent: **05.12.2012**
(21) Application number: 07859145.0
(22) Date of filing: 19.12.2007
(51) Int. Cl.: B60C 11/12

(54) **TYRE FOR VEHICLE WHEELS**
REIFEN FÜR FAHRZEUGRÄDER
PNEU POUR ROUES DE VÉHICULE

(43) Date of publication of application: 06.10.2010
(73) Proprietor: Pirelli Tyre S.P.A., 20126 Milan (IT)
(72) Inventor: CASTELLINI, Alessandro, 20126 Milano (IT)
(74) Representative: Castiglia, Paolo
(86) International application number: PCT/IB2007/004038
(87) International publication number: WO 2009/077808

(56) References cited:
- EP-A- 1 195 271
- JP-A- 2000 025 419
- US-A1- 2007 187 014

## Description

The present invention relates to a tyre for vehicle wheels, in particular for heavy load vehicle wheels.

The invention also relates to a tread band for one such a tyre, in particular a premoulded tread band for covering worn tyres.

A tyre for vehicle wheels intended to be used on heavy load vehicles generally comprises at least one carcass structure comprising a structure ply formed by reinforcing cords embedded in an elastomeric matrix. The carcass ply has end edges respectively engaged with annular anchoring structures. The latter are arranged in the zones of the tyre usually identified with the name of "beads" and normally consist each of an annular substantially circumferential insert on which at least one filling insert is applied, in radially outer position thereof. Such annular anchoring structures are commonly identified as "bead cores" and have the task of keeping the tyre well fixed to the anchoring seat specifically provided in the wheel rim, thus preventing, in operation, the radially inner end edge of the tyre coming out from such seat.

At the beads specific reinforcing structures may be provided having the function of improving the torque transmission to the tyre.

In a radially outer position with respect to the carcass ply, a belt structure comprising one or more belt layers is associated, said belt layers being arranged radially one of top of the other and having textile or metal reinforcing cords with crossed orientation and/or substantially parallel to the direction of circumferential extension of the tyre.

In a radially outer position with respect to the belt structure a tread band is applied, made from elastomeric material as well.

On the side surfaces of the carcass structure respective sidewalls of elastomeric material are also applied, each one extending from one of the side edges of the tread band up to the respective annular anchoring structure to the beads.

As is known, the tyres intended to be used on heavy load vehicles are typically required to have optimal traction capability, acceleration, directionality and controllability characteristics, even on snowy or wet road surfaces.

Another characteristic typically required to the tyres is a limited, and/or as much as possible uniform, wear, so as to increase the performances of the tyres in terms of kilometric yield and reduce the running and vibrations on travel.

The aforementioned characteristics in part contrast with each other. In particular, in practice it is not possible to ensure optimal performances in terms of traction capability, acceleration, controllability and directionality without in some manner affecting the tyre performances in terms of kilometric yield and noise/vibrations.

The tyre performances on travel considerably depend on the design of the tread band thereof.

Typically, the tread band of a tyre comprises an annular central portion astride the equatorial surface of the tyre and two annular shoulder portions arranged on axially opposite sides with respect to the aforementioned annular central portion and separated from the latter by respective circumferential groove.

The tread band moreover comprises a plurality of grooves and sipes arranged transversally and circumferentially in order to define a tread design. The aforementioned grooves and sipes define a plurality of blocks in the tread design.

The circumferential and transversal sipes typically have a shape such to define, in the adjacent blocks, respective mutual embedding or constraining portions, both in circumferential direction and in axial direction. The embedding in the circumferential direction contributes to give stability to the tyre, above all in the travel direction, while the embedding in the axial direction contributes to confer stability to the tyre particularly in the lateral direction. Such stability is essentially given by the lesser mobility of the blocks in the ground-contacting area of the tyre due to the mutual abutment between contiguous blocks caused by the closure of the sipes.

Throughout the present description and in the subsequent claims, the term: "block", is used to indicate a tread band portion delimited by consecutive grooves or sipes both in an axial and circumferential direction, the "groups of block" being instead circumferentially delimited by two subsequent transversal grooves and formed by a number of blocks which are,circumferentially aligned and separated by transversal sipes.

Throughout the present description and in subsequent claims, the terms: "grooves" and "sipes", are used to indicate channels formed in the tread band of the tyre, the transversal and circumferential sipes having a width, respectively in a circumferential and transversal direction, lower than the width in a circumferential and transversal direction of the transversal and circumferential grooves.

Throughout the present description and in the subsequent claims, moreover, the terms: "axial" and "axially", are used to indicate a direction substantially orthogonal to the equatorial plane of the tyre, i.e. a direction substantially parallel to the rotation axis of the tyre. The terms: "radial" and "radially", are instead used to indicate a direction substantially orthogonal to the rotation axis of the tyre and lying on a plane passing through such rotation axis, while the terms: "circumferential" and "circumferentially", are used to indicate a direction substantially parallel to the equatorial plane of the tyre along the annular extension thereof.

Throughout the present description and in the subsequent claims, the expression: "ground-contacting area of the tyre", is used to indicate the portion of the peripheral surface of the tread band in contact with the road surface.

While the circumferential grooves affect the behaviour of the tyre in terms of lateral stability and directionality, the transversal grooves affect the behaviour of the tyre in terms of traction capability and acceleration. The circumferential and transversal grooves moreover affect the water removal in the ground-contacting area of the tyre while running over wet road surfaces, reducing the aquaplaning phenomena.

A high contribution in terms of traction capability and acceleration is given to the tyre by the grip fronts defined on the tread band by the transversal sipes. Such sipes also contribute, in case of wet road surface, to the water removal.

In the case of snowy road surface, the transversal sipes among other things ensure the trapping of the snow in the ground-contacting area of the tyre, so as to make on travel a contact between tyre and road surface of snow/snow type, such a type of contact being desired as it confers greater traction capability to the tyre. In fact, during the rolling of the tyre, the transversal sipes entering the ground-contacting area of the tyre are closed due to the mobility of the blocks under the ground-contacting area of the tyre, in such a manner trapping the snow, to then be opened by exiting the ground-contacting area of the tyre.

In the scope of the present description and subsequent claims, the terms: "entering" and "exiting", are used to indicate - with reference to the ground-contacting area of the tyre and with regard to the structural characteristics of the blocks of the tread band (or of the transversal sipes) - those portions of the blocks which are first stressed or are the first entering in contact with the road surface during the rolling of the tyre (or the transversal sipes adjacent to such block portions) and, respectively, the block portions which are last stressed or are the last abandoning the contact with the road surface (or the transversal sipes adjacent to those block portions).

US 2007/0187014 describes a tyre for heavy load vehicle wheels, comprising a tread band having a plurality of blocks circumferentially separated by transversal sipes having a profile that, on the rolling face of the tyre and along a direction inclined by an angle α with respect to the axial direction, is defined by two axially outer rectilinear lines arranged on the opposite side with respect to a central rectilinear line. The central rectilinear line is parallel to the aforementioned two axially outer rectilinear lines and is circumferentially spaced apart from them. The central rectilinear line is connected to the two axially outer rectilinear lines through two opposite side lines orientated perpendicularly to the aforementioned rectilinear lines, so as to substantially form a tooth having side walls parallel to one another. The two side lines extend in the radial direction with a zigzag progression defining in the adjacent blocks respective raised and grooved mutual embedding portions.

JP 200025419 discloses a tyre according to the preamble of claim 1 with a tread comprising, on a tread face, multiple sipes which are arranged in the tyre width direction, at intervals in the tyre peripheral direction, on blocks. Each sipe is partially protruded in one direction of the tyre peripheral direction and a protruded section narrow in width at the bottom section and wide at the upper section in a plan view shape is formed. The width of the sipe is set to 15-40 mm, open sipes opened on both sides of the block are preferably provided and closed sipes opened on one side of the block and closed on the other side or closed sipe closed on both sides of the block may be provided. The braking/driving performance on an ice and snow road surface is improved. EP 1195271 discloses a vehicle tyre with a running ply with profile positives, such as profile blocks or running ply bands, which are equipped with a cut-in pattern composed of identical individual elements when viewed from above. The individual elements are arranged above edges forming undercuts and mirror inverted recesses in the way of a puzzle.

The Applicant observed that a high number of transversal sipes having a shape such as to define, in the adjacent blocks, mutual embedding portions, if on one hand can be advantageous for the improvement of the tyre performances in terms of traction capability, acceleration, snow trapping, water removal and lateral stability, on the other hand can lead to a decline of the tyre performances in terms of kilometric yield, as well as the rise of disturbing vibrations and noise due to the excessive and/or irregular wear of the tread band.

The Applicant is convinced that such decline of the tyre performances occurs particularly due to the continuous mutual friction of the walls of the adjacent blocks during opening and closing of the transversal sipes, respectively in the steps of exiting from, and entering in, the ground-contacting area of the tyre. On the other hand, the Applicant is conviced that, in order to enhance the performances of the tyre in terms of lateral stability, traction capability and acceleration on snowy or wet surfaces, and water removal on wet surfaces, it is advantageous to make use of transversal sipes having a profile such as to permit an adequate mutual embedding of the adjacent blocks and a sufficient opening and closing of the sipe at the ground-contacting area of the tyre.

In order to satisfy the aforementioned partly contrasting needs, the Applicant has designed a tread design comprising appropriately shaped transversal sipes in order to achieve the embedding between the adjacent - so as to obtain the desired performances of the tyre in terms of lateral stability - at the same time ensuring a sufficient opening of the sipes coming out from the ground-contacting area of the tyre - so as to obtain the desired performances in terms of traction capability and acceleration on snowy or wet surfaces and water removal on wet surfaces. In such design, the profile of the transversal sipe is such that the opening of the transversal sipes exiting from the ground-contacting area of the tyre is in some manner controlled, so as to limit as much as possible the friction of the walls of the adjacent blocks and thus limit the wear of the tread band, in this manner increasing the kilometric yield of the tyre and reducing the possibility that undesired noise and vibrations arise.

In particular, the Applicant has found that it is possible to obtain a tyre having optimal characteristics, either in terms of traction capability, acceleration, snow trapping, water removal and lateral stability, and in terms of kilometric yield and wear, using a tread design comprising transversal sipes wherein the embedding is obtained through the arrangement on the surface of the transversal sipe of at least one undercut portion.

The present invention therefore relates to a tyre for vehicle wheels having the features of claim 1.

Throughout the present description and in the subsequent claims, the term: "deformation", is used to indicate, with reference to a main surface of the transversal sipe, a deviation from such main surface, along an inclined direction with respect to said surface, such as for example a substantially circumferential direction, having an axial extension lower than that of the transversal sipe.

Advantageously, the transversal sipe of the tyre of the present invention has a profile such that the mutual constraint between the adjacent blocks is obtained at the undercut surface portion of the sipe, whereas at the remaining surface portion thereof the sipe is free to open. Therefore, a sufficiently wide sack is formed in the area of the sipe different to that at the undercut portion, to allow snow to be trapped and held - thus attaining the desired performance of the tyre in terms of traction, capability and acceleration on snowy road surfaces and of water removal on wet road surfaces. Moreover, at the undercut portion of the sipe a mutual constraint between the circumferentially consecutive blocks is achieved which is sufficiently strong to stiffen the blocks of the tread band, thus attaining the desired performance of the tyre in terms of lateral stability.

Moreover, the particular profile of the transversal sipe of the tyre of the present invention allows, in the exiting step from the tyre ground-contacting area, preventing the opening of the sipes beyond a certain limit. This limit is reached when the walls of the blocks at the undercut portion of the sipe come into contact with each other, mutually obstructing each other. A controlled opening of the sipes is therefore obtained, with a consequent reduction of the wear caused by the mutual friction of the walls of the adjacent blocks in the opening and closing step of the sipe. Thus, it follows that an increase of the kilometric yield of the tyre and an attenuation of the problems related to undesired noise and vibrations is attained.

In addition, the undercut portion defines a deviated portion in the transversal sipe. Advantageously, such a deviated portion, as well as making a constraint between the circumferentially consecutive blocks against lateral stresses - in this way giving lateral stability to the tyre - increases the surface extension of the sipe, allowing a greater accumulation of snow when the sipe opens.

The tyre of the present invention is particularly adapted to be used in driving wheels of heavy load vehicles, but it can also be conveniently used in the directional wheels of such vehicles.

The present invention, in at least one of the aforementioned aspects, can have at least one of the following preferred characteristics.

In the preferred embodiments of the present invention, the main surface of the transversal sipe is substantially flat.

Preferably, the aforementioned deformation extends axially in a central area of the sipe. In this case, the opening of the sipe is therefore at its maximum at the axially outer areas of the sipe. A sufficiently wide sack is this formed in such areas of the sipe to allow snow to be trapped and held - thus attaining optimal performance of the tyre in terms of traction capability and acceleration on snowy road surfaces and of water removal on wet road surfaces.

Preferably, the aforementioned deformation extends radially in a central area of the sipe.

More preferably, the aforementioned deformation extends radially along the entire radial extension of the sipe, thus obtaining a sufficiently deep snow accumulation sack and a sufficiently extensive constraint.

Preferably, said at least two undercut portion are defined by a substantially S-shaped surface portion. In this way the provision of corners that can lead to undesired concentrations of tension, problems of irregular wear and problems of extraction of the sipe from the mould is avoided.

Preferably, the aforementioned undercut portions extend from opposite sides with respect to a plane perpendicular to a transversal plane of the sipe. In this case, the opening of the sipe is thus at its maximum both at the axially outer areas thereof and at the central area thereof, between the two undercut portions. In other words a sack is advantageously formed for trapping and holding snow also in the central area of the sipe.

Preferably, the two undercut portions are arranged symmetrically with respect to the aforementioned plane perpendicular to the transversal plane of the sipe. More preferably, the two undercut portions extend radially along the entire radial extension of the sipe.

Preferably, the two undercut portions are connected to each other by a flat surface portion.

In some embodiments of the present invention, the flat surface portion has the same circumferential distance from the main surface of the sipe moving from a radially outer end towards a radially inner end of the sipe.

In other embodiments of the present invention, the circumferential distance between the flat surface portion and the main surface of the sipe reduces moving from a radially outer end towards a radially inner end of the sipe.

In the present invention and/or in the aforementioned embodiments in which there is a variation of the circumferential size of the deformation of the sipe, a greater embedding is achieved at the radially outermost portions of the sipe and a lower embedding is achieved at the radially innermost portions of the sipe. Such a configuration is particularly advantageous considering the fact that, when the tyre is new, the radial extension and the mobility of the blocks is high and there is the maximum opening of the sipe. It is thus convenient in these conditions to have the maximum embedding between the walls of the circumferentially consecutive blocks. As the tread band is worn, the radial extension and mobility of the blocks is reduced; in these conditions it is advantageous to have a lower embedding.

In some embodiments of the present invention, the deformations of two consecutive sipes of said at least one circumferential row are orientated in a same way along a circumferential direction. Such an embodiment is particularly advantageous in the case of tyres with a predetermined direction of rolling.

In alternative embodiments of the present invention, the deformations of two consecutive sipes of said at least one circumferential row are orientated in two opposite ways along a circumferential direction. Such embodiments are particularly advantageous in the case of tyres without a predetermined direction of rolling.

In this last case, the deformations of the two consecutive sipes are orientated towards one another or, alternatively, one away from the other.

Preferably, the tread band of the tyre of the present invention comprises, in the central annular portion thereof, at least two circumferential rows of blocks, such rows being axially separated by a circumferential sipe. Advantageously, the circumferential sipe gives the tyre stability in the direction of travel.

Preferably, the tread band comprises a first circumferential groove astride the equatorial plane of the tyre and two second circumferential grooves arranged on axially opposite sides with respect to the first circumferential groove, the circumferential rows of blocks being arranged between the first circumferential groove and each of the second circumferential grooves.

The particular pattern of the tread band described above can be used in both winter tyres and city tyres.

Preferably, in the case of winter tyres, the tread band comprises groups of blocks separated by transversal grooves. Advantageously, such grooves define grip fronts to give the tyre greater traction capability and acceleration on snowy or wet road surfaces, and allow better trapping of snow and water removal.

Preferably, the aforementioned blocks are elongated in the axial direction.

Preferably, the groups of blocks of a circumferential row are at offset circumferential positions with respect to the groups of blocks of the axially adjacent circumferential row, to give the tyre better lateral stability.

On the other hand, in the case of city tyres, a transversal sipe is provided between each block of a circumferential row and the circumferentially consecutive block.

Preferably, the blocks in this case are elongated in the circumferential direction.

Preferably the blocks of a circumferential row are at offset circumferential positions with respect to the blocks of the axially adjacent circumferential row, to give the tyre better lateral stability.

Irrespective of the type of tyre, preferably, each of the two annular shoulder portions comprises sipes of identical shape to, and different sizes from, the sipes of the central annular portion of the tread band.

Further characteristics and advantages of the present invention will be clearer from the following detailed description of some preferred embodiments of a tyre in accordance with the present invention, made with reference to the attached drawings. In such drawings:
- figure 1 shows a transversal section view of a first embodiment of a tyre according to the invention, made according to the line I-I of figure 2;
- figure 2 shows a plan development of a portion of the tread band of the tyre of figure 1;
- figure 3 shows a plan development of a portion of the tread band of a second embodiment of a tyre according to the invention;
- figure 4 shows a perspective view of a portion of tread band of figure 2;
- figure 5 shows a perspective view of a transversal sipe that can be used in the tread band of figures 2 and 3 but which is out of the scope of the present invention;
- figure 6 shows a perspective view of the transversal sipe wich is used in the tread band of figures 2 and 3;
- figure 7 shows a perspective view of an alternative embodiment of a transversal sipe that can be used in the tread band of figures 2 and 3;
- figures 8, 9 and 10 show three different possible embodiments of portions of the tread band of figures 2 and 3.

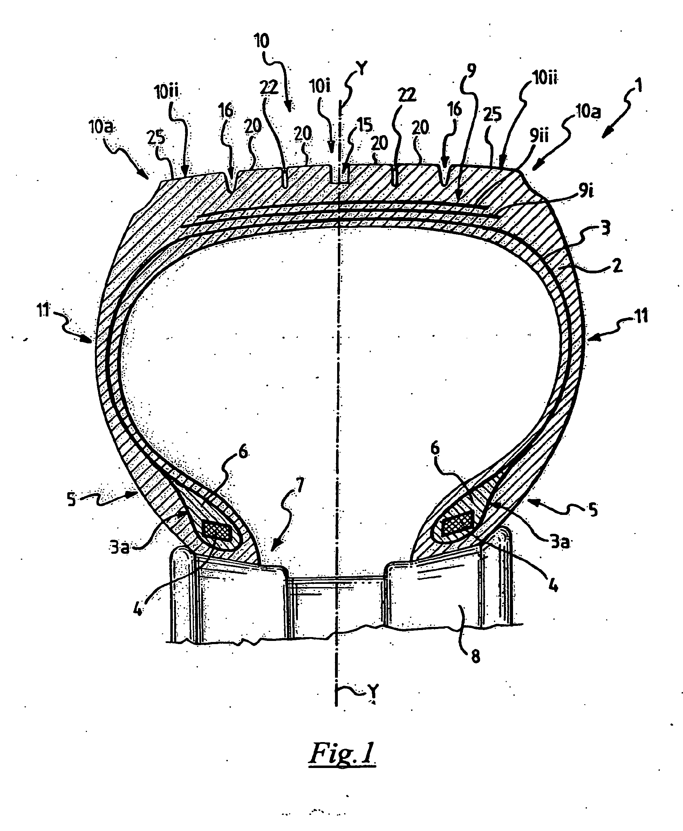

In figure 1, a tyre for vehicle wheels according to the present invention, in particular a tyre intended to be used in the driving wheels of a heavy load vehicle, is on the whole indicated with 1.

Throughout the present description and in subsequent claims, the expression "heavy load vehicle", is used to indicate a vehicle belonging to the categories M2∼M3, N2∼N3 and O2∼O4 defined in "Consolidated Resolution on the Construction of Vehicles (R.E.3) (1997)", Annex 7, pages 52-59, "Classification and definition of power-driven vehicles and trailers", such as for example trucks, lorries, tractor trailers, buses, large vans and other vehicles of this type.

The tyre 1 comprises a carcass structure 2, including at least one carcass ply 3 formed by reinforcing cords embedded in an elastomeric matrix.

The carcass ply 3 has opposite end edges 3a engaged with respective bead cores 4. The latter are situated in the zones 5 of the tyre 1 normally identified with the name of "beads".

On the outer perimeter edge of the bead cores 4, an elastomeric filling 6 is applied which occupies the space defined between the carcass ply 3 and the respective end edge 3a of the carcass ply 3. The bead cores 4 maintain the tyre 1 well fixed to the anchoring seat 7 which is specifically provided in the wheel rim 8, thus preventing in operation the bead 5 coming out from such seat 7.

Specific reinforcing structures (not illustrated) can be provided at the beads 5, having the function of improving the torque transmission to the tyre 1.

A belt structure 9 is associated to the carcass ply 2 in a radially outer position thereof and preferably comprises a number of belt layers (in the specific illustrated example, two layers 9i, 9ii are shown) arranged radially one on top of the other and having textile or metal reinforcing cords with crossed orientation and/or substantially parallel to the direction of circumferential extension of the tyre.

A tread band 10 is applied to the belt structure 9 in a radially outer position thereof, the tread band 10 being of elastomeric material as well.

Moreover, respective sidewalls 11 of elastomeric material are applied on the side surfaces of the carcass structure 2, each one extending from one of the side edges 10a of the tread band 10 up to the respective annular anchoring structure 4 to the beads 5.

With reference to the figures 1-3, the tread band 10 comprises an annular central portion 10i astride the equatorial plane Y-Y of the tyre 1 and two opposite annular shoulder portions 10ii arranged in axially opposite sides with respect to the central annular portion 10i.

The annular central portion 10i of the tread band comprises a circumferential central groove 15 astride the equatorial plane Y-Y. Each annular shoulder portion 10ii is separated from the annular central portion 10i of the tyre 1 by a respective circumferential lateral groove 16.

The tread band 10 comprises, at the annular central portion 10i thereof, a plurality of blocks 20 arranged on opposite sides of the circumferential central groove 15 and the circumferential lateral grooves 16. In the following description, the blocks 20 will be indicated also with the expression: equatorial blocks.

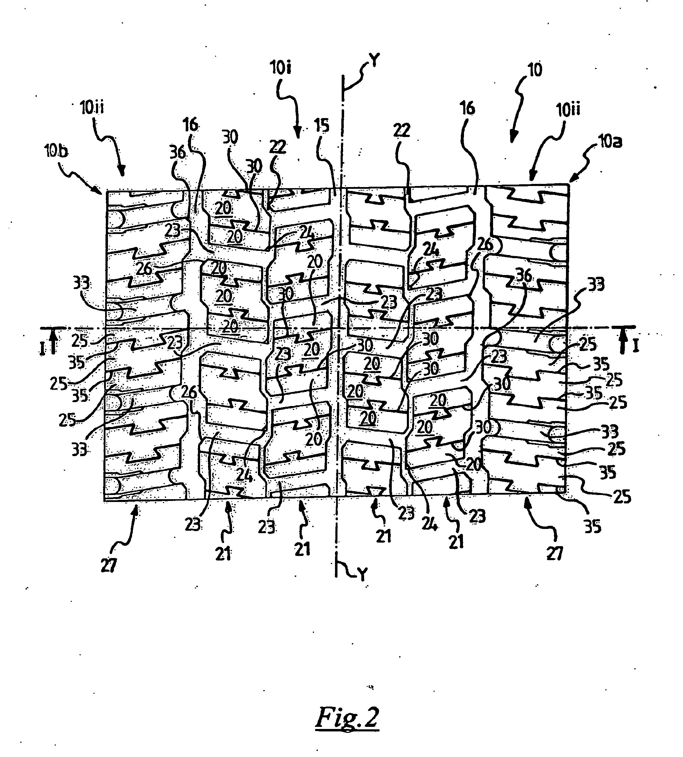

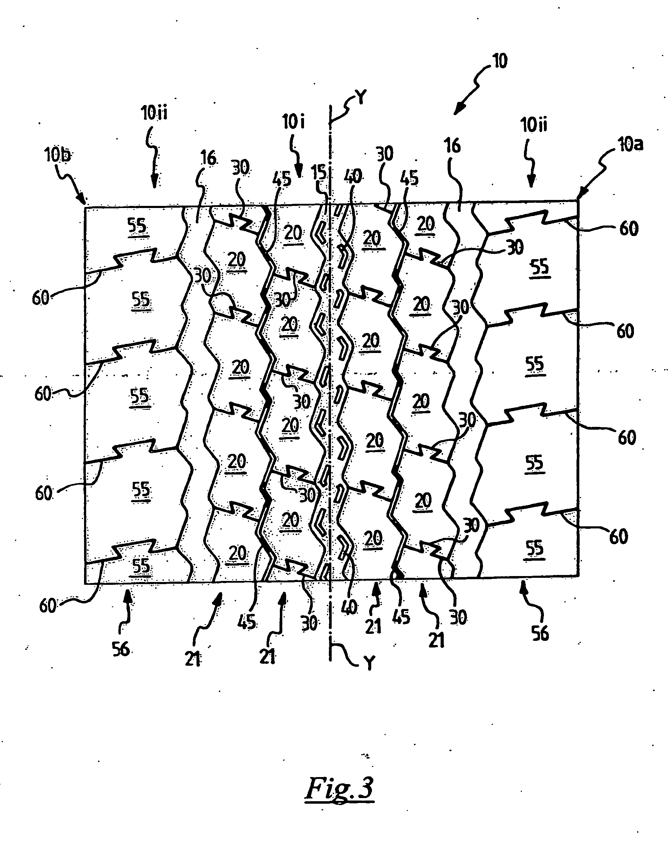

With particular reference to figures 2 and 3, the equatorial blocks 20 are arranged along circumferential rows 21 axially separated by respective circumferential sipes 22. In the specific example,illustrated in figures 2 and 3, two rows 21 of blocks 20 are provided at each zone of the annular central portion 10i comprised between the circumferential central groove 15 and each circumferential lateral groove 16.

Still at the annular central portion 10i thereof, the tread band 10 comprises a plurality of transversal sipes 30 interposed between circumferentially consecutive blocks 20.

The transversal sipes 30 extend along a direction substantially perpendicular to the equatorial plane Y-Y of the tyre 1. Throughout the present description and in the subsequent claims, with the expression: direction substantially perpendicular to the equatorial plane, it is meant a direction which forms an angle with the equatorial plane comprised between 70° and 110°.

The tread design illustrated in figure 2 will now be described in more detail. Such tread design is particularly adapted for being used in a winter tyre.

As illustrated in figure 2, the blocks 20 have a substantially parallelepiped shape, elongated in the axial direction.

The blocks 20 of each circumferential row 21 are grouped three by three, each group of blocks 20 comprising two transversal sipes 30 and being circumferentially separated from a consecutive group of blocks 20 of the same row 21 by a respective transversal groove 23. For the sake of clarity of illustration, the numeric reference 20 is associated only with some of the blocks, the numeric reference 30 is associated only with some of the transversal sipes and the numeric reference 23 is associated only with some of the transversal grooves.

Preferably, as illustrated in figure 2, the groups of blocks 20 of a circumferential row are at offset circumferential positions with respect to the groups of blocks 20 of the axially adjacent circumferential row 21.

The circumferential grooves 16 and the circumferential sipes 22 preferably extend over the entire circumferential extension of the tyre 1 along a path forming a broken line defined by first circumferential sections parallel to the equatorial plane Y-Y and second circumferential sections inclines with respect to the equatorial plane Y-Y and joining the aforementioned first sections. In such a manner, the traction capability of the tread band 10 is advantageously increased in the forward direction of the tyre.

Preferably, some of the blocks 20 of the annular central portion 10i of the tread band 10 of the example of figure 2 have a bevelled corner 24 at the circumferential sipe 22. Other blocks 20 of the annular central portion 10i preferably have a bevelled corner 26 at the circumferential groove 16. Advantageously, the number of corners which could, due to their mobility, trigger irregular wear and noise phenomena is thus appropriately reduced.

Preferably, the maximum depth of the tread band 10 (and thus the maximum depth of the circumferential central groove 15, of the circumferential lateral grooves 16, of the circumferential sipes 22 and of the transversal grooves 23) is comprised between about 10 mm and about 25 mm, such depth being more preferably equal to about 22.5 mm. The depth of the transversal sipes 30 is preferably between 20% and 100% of the maximum depth of the tread band 10.

In particularly preferred embodiment of a tyre of the present invention of the winter type, such as that illustrated in figure 2, the volume occupied by the blocks 20, or volume of the solids, in the annular central portion 10i of the tread band, in a portion of the tread band 10 having a length equal to the pitch of the tread design and a width equal to the axial extension of the tread band, is comprised between 60% and 85% of the overall volume of such annular central portion 10i (total volume). More preferably, the ratio between the volume of solids and the total volume is equal to about 68%.

Preferably, the aforementioned tyre further comprises, at each of the two annular shoulder portions 10ii, a plurality of lateral blocks 25, also these being arranged along a respective circumferential row 27 comprised between the circumferential groove 16 and a respective end portion 10a of the tread band 10.

The lateral blocks 25 are grouped three by three, each block 25 of one group being separated from the circumferentially consecutive block of the same group by a lateral transversal sipe 35. Each group of blocks 25, in turn, is separated from the circumferentially consecutive group of blocks 25 by a lateral transversal groove 33.

The axial extension of the lateral blocks 25, of the lateral transversal sipes 35 and lateral transversal grooves 33 is greater than that, respectively, of the blocks 20, transversal sipes 30 and transversal grooves 23 of the central annular portion 10i of the tread band 10.

The groups of lateral blocks 25 are preferably offset in circumferential direction with respect to the groups of equatorial blocks 20 of the row 21 arranged on the opposite side with respect to the circumferential groove 16.

Preferably, some of the lateral blocks 25 have a bevelled corner 36 at the circumferential groove 16.

The tread design illustrated in figure 3 is now described in more detail. Such tread design is particularly adapted for being used in a city tyre.

The tread design of figure 3 differs from that of figure 2 only in the features discussed below.

The blocks 20 preferably have a substantially parallelepiped shape, elongated in the circumferential direction and all of them are separated from circumferentially consecutive blocks 20 by a respective transversal sipe 30. Comparing the tread design of figure 3 with that of figure 2, it is noted how in the tread design of figure 3 circumferentially consecutive groups of blocks comprised between transversal sipes corresponding to the transversal sipes 23 of the tread design of figure 2 are not identifiable.

The transversal sipes 30 have an inclination, with respect to the equatorial plane Y-Y of the tyre 1, preferably greater than that of the sipes of the tread design of figure 2. More preferably, the angle of inclination of the transversal sipes 20 of the tread design of figure 3 with respect to the equatorial plane Y-Y of the tyre is comprised between 60° and 120°.

Preferably, the blocks 20 of a circumferential row 21 are at offset circumferential positions with respect to the blocks 20 of the axially adjacent circumferential row 21.

The central circumferential groove 15 preferably comprises a plurality of ribs 40, extended from the bottom thereof, intended both to prevent the trigger of tearing in the rubber composition and to protect the underlying belt structure.

The circumferential grooves 16 and the circumferential sipes 22 preferably extend over the entire circumferential extension of the tyre 1 along a path forming a broken line having a substantially zigzag progression, so as to give to an improved traction capability to the tyre in the forward direction.

Preferably, the maximum depth of the circumferential central groove 15 and of the circumferential lateral grooves 16 is for example about 19.5 mm, while that of the circumferential sipes 22 is for example of about 8 mm. The depth of the transversal sipes 30 is preferably lower than or equal to about 14 mm.

In a particularly preferred embodiment of a tyre of the present invention of the city type, as that shown in fig. 3, the ratio between the volume of solids and the total volume is equal to about 78%.

Preferably, the aforementioned tyre further comprises, at each of the two annular shoulder portions 10ii thereof, a plurality of lateral blocks 55, also these being arranged along a respective circumferential row 56 comprised between the circumferential groove 16 and a respective end portion 10a of the tread band 10.

The lateral blocks 55 are defined by lateral transversal sipes 60, preferably having a depth lower than or equal to about 7 mm.

The axial extension of the lateral sipes 65 and transversal sipes 60 is respectively greater than that of the blocks 20 and of the transversal blocks 30 of the central annular portion 10i of the tread band 10.

The lateral blocks 25 are preferably offset in circumferential direction with respect to the equatorial blocks 20 of the row 21 arranged on the opposite side with respect to the circumferential groove 16.

Both in the tread pattern of figure 2 and in the tread pattern of figure 3, the transversal sipes 30 of the annular central portion 10i and the lateral transversal sipes 35, 55 of the annular shoulder portions 10ii of the tread band 10 are identical in shape. For an easier discussion and reading, throughout the present description the shape of such transversal sipes will be described making explicit reference to the transversal sipes 30 of the annular central portion 10i of the tread band 10, it being understood that what said is also applicable to the transversal sipes 35, 55 of the annular should portion 10ii of the tread band 10.

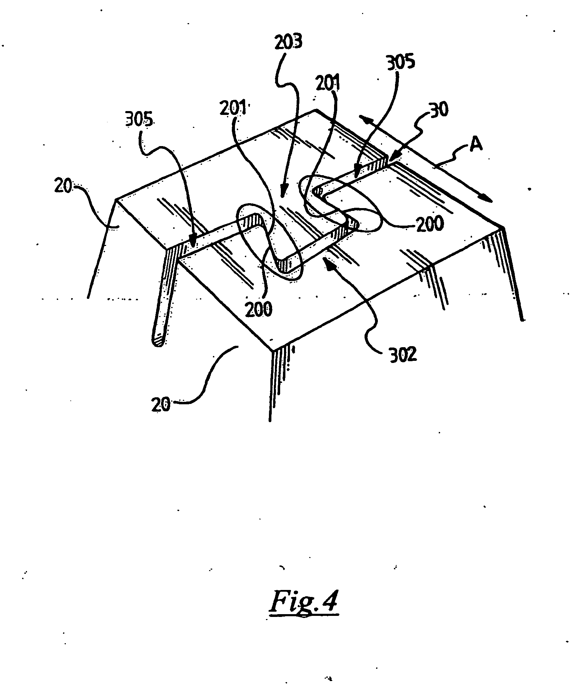

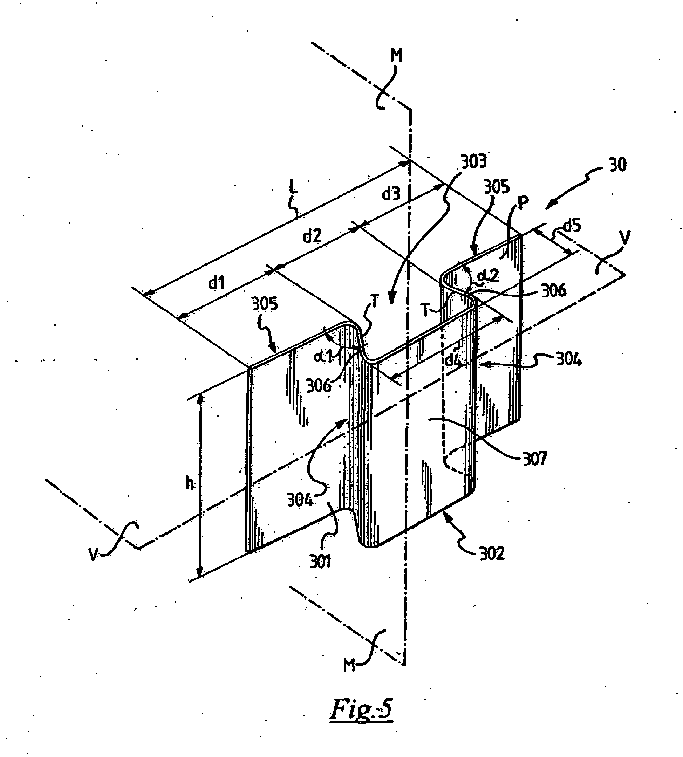

Figures 4 and 5 show a preferred embodiment of a mould portion adapted to make in the tyre a transversal sipe 30 of the tread band 10 illustrated in figure 2.

In the following description, for an easier description, "sipe" indicates and represents both the sipe obtained on the tread design and the portion of the mould adapted to obtain the sipe. It should be noted that the surfaces of the aforementioned mould portion are perfectly matched to the surfaces of the obtained sipe.

As can be seen in particular in figure 5, the sipe 30 comprises a main surface 301 having a predetermined radial extension (or depth) H and a predetermined axial extension (or length) L. As already anticipated, the depth H is preferably comprised between 20% and 100% of the maximum depth of the tread band 10. The length L is preferably equal to that of the equatorial blocks 20; such a length L is preferably lower than or equal to 55 mm.

The main surface 301 is preferably flat and has a deformation 302 adapted to define, in the two block 20 circumferentially adjacent to the transversal sipe 30, respective portions of mutual embedding, as shown in figure 4.

The deformation 302 comprises, in particular, two undercut portions 304 extending in the circumferential direction, i.e. in a direction substantially perpendicular to a lying plane P of the main surface 301 of the transversal sipe 30.

The undercut portions 304 extend radially in a central area 303 of the main surface 301 of the sipe 30 along the entire radial extension of the sipe 30.

Preferably, as illustrated in figure 5, the two undercut portions 304 extend from opposite sides with respect to a middle radial plane M of the sipe 30, such a plane M being perpendicular to a transversal plane V of the sipe 30. More preferably, the two undercut portions 304 are arranged symmetrically in the axial direction with respect to the aforementioned plane M.

The undercut portions 304 define respective deviated portions in the transversal sipe 30 that, as well as making the embedding between the circumferentially consecutive blocks 20, increase the surface extension of the sipe 30, allowing the accumulation of snow when the sipe opens.

Moreover, the undercut portions 304 allows, in an exiting step from the ground-contacting area of the tyre, preventing the sipe 30 from opening beyond a certain limit. As illustrated in figure 4 at the areas highlighted in bold, this limit is reached when, during the opening of the sipe 3, i.e. during the movement of the circumferentially consecutive blocks 20 away from each other along the direction A, the walls 200 of the embedding portion of a block 20 come into contact with the walls 201 of the embedding portion of the circumferentially consecutive block 20, blocking one another and preventing any further opening of the sipe 30.

The sipe 30 is thus free to open at the axially outer areas thereof 305 and at the central area 303 thereof, advantageously forming in these areas respective sacks for trapping and holding snow.

As illustrated in figure 5, each undercut portion 304 is preferably defined by a substantially S-shaped surface portion T, so as to avoid the provision of corners that would inevitably lead to undesired concentrations of tension, problems of irregular wear and problems of extraction of the sipe from the mould.

Again with reference to figure 5, the two undercut portions 304 comprise two side walls 306 inclined by respective angles α1 and α2 with respect to the main surface 301 of the sipe 30. Preferably, the angles α1 and α2 are of equal size. More preferably, such a size is comprised between about 40° and about 80°.

The side walls 306 are connected axially by a flat surface portion 307 parallel to the lying plane P of the main surface 301 of the sipe 30. In other words, moving from a radially outer end towards a radially inner end of the sipe 30, the distance d5 between the flat surface portion 306 and the main surface 301 of the sipe 30 remains the same. In practice, the deformation 302 is substantially shaped as a puzzle.

The axial extension d4 of the flat surface portion 306 is preferably comprised between about 5 mm and about 40 mm, in the embodiment of Figure 5, which is out of the scope of the present invention, the axial extension d4 remains constant moving from a radially outer end towards a radially inner end of the sipe 30. The distance d2 between the two side walls 306 at the main plane 301 has a value preferably comprised between the 30% and the 90% of d4.

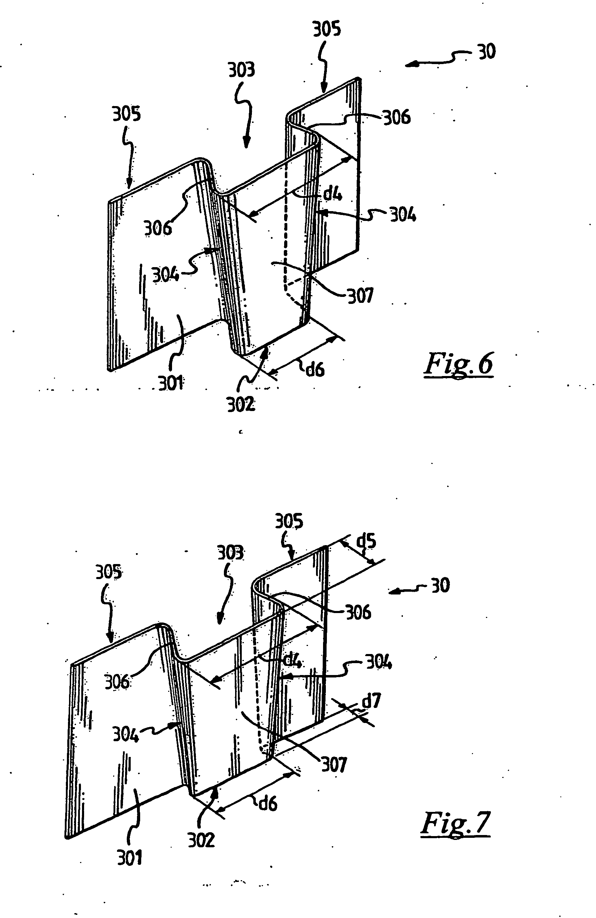

Figure 6 shows the transversal sipe 30 of the present invention. Such a sipe 30 differs from the one illustrated in figure 5 only in that the axial extension d4 of the flat surface portion 306 decreases moving radially from the radially outer end towards the radially inner end of the sipe 30, varying from a value d4 at the radially outer end of the sipe 30 to a value d6 lower than d4 at the radially inner end of the sipe 30.

Figure 7 shows an alternative embodiment of the transversal sipe 30. Such an embodiment differs from the one illustrated in figure 6 only in that, moving from a radially outer end towards a radially inner end of the sipe 30, the distance d5 between the flat surface portion 306 and the main surface 301 of the sipe 30 decreases, starting from a value d5 at the radially outer end of the sipe 30 and reaching a value d7 lower than d5 at the radially inner end thereof.

The embodiments of figure 6 and 7 advantageously allow, when the tyre is new, and therefore when the radial extension and the mobility of the blocks 20 is high, achieving the maximum embedding between the walls of the circumferentially consecutive blocks 20, such embedding reducing as the tread band, wearing down, exhibit more rigid portions of blocks on the outer peripheral surface thereof.

The arrangement and the number of transversal sipes 30 in the tread band 10 of figures 2 and 3 can depend upon the geometric size of the tread band 10 and the intended use.

The number of transversal sipes in a circumferential pitch of the tread pattern is preferably comprised between 1 and 4. For example, 2 transversal sipes can be provided in a short pitch, 3 in a long pitch. The distribution in an axial pitch is such that from 1 to 4 transversal sipes are preferably provided. For example, 2 sipes can be provided in the annular shoulder portion 10ii, 3 in an intermediate annular portion and 4 sipes in the central annular portion.

The arrangement of the transversal sipes 30 in the circumferential direction can advantageously influence the direction of rolling of the tyre 1 of the present invention.

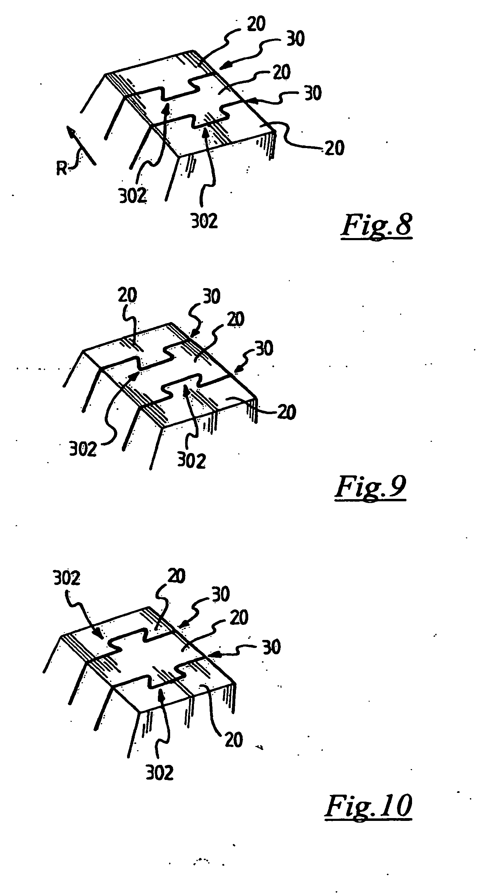

In particular, the sipes 30 can be arranged so that the deformations 302 of two circumferentially consecutive sipes 30 are orientated in the same way along the circumferential direction, as in figure 8. Such an embodiment defines a preferred direction of rolling in the tyre, which is the one indicated by the arrow R.

The sipes 30 can alternatively be arranged so that the deformations 302 of two circumferentially consecutive sipes 30 are orientated in two opposite ways along a circumferential direction, as illustrated in figures 9 and 10.

In particular, in figure 9 the deformations 302 of the two circumferentially consecutive sipes 30 are orientated towards one another, whereas in figure 10 the deformations 302 of the two circumferentially consecutive sipes 30 are orientated away from one another. Such embodiments do not define a predefined direction of rolling in the tyre.

Comparing figures 8-10 with figures 2 and 3, it can be seen how in the tread band 10 of figure 2 the transversal sipes 30 have, in the central annular portion 10i, an arrangement of the type of figure 9, whereas in the annular shoulder portions 10ii they have an arrangement of the type of figure 8. In the tread band 10 of figure 3, on the other hand, the transversal sipes have an arrangement of the type of figure 8 both in the central annular portion 10i and in the annular shoulder portions 10ii.

The tread design illustrated in figures 2 and 3 are only examples of a high number of tread designs which can be effectively made according to specific requirements. In particular, the number of blocks, transversal sipes, circumferential sipes, transversal grooves (if present), circumferential grooves, rows of blocks and possible the number of blocks of each group of blocks (if present), the circumferential position of the blocks of one row with respect to that of the blocks of the axially adjacent row and/or the circumferential position of the blocks of the annular central portion of the tyre with respect to that of the blocks of the annular shoulder portions of the tyre can vary according to the intended specific use of the tyre, thus obtaining a tread design which is different from that illustrated in figures 2 and 3 but which is always within the scope of protection defined by the following claims. Tread designs can also be provided without the central groove 15, or with blocks, circumferential and transversal grooves (if present) and circumferential sipes of a shape and/or size different from those described above with reference to figures 2 and 3. Also the inclination of the transversal sipes with respect to the equatorial plane Y-Y can be different from that illustrated in figures 2 and 3, always remaining within the scope of protection defined by the following claims.

Obviously, a man skilled in the art can make further modifications and variants in order to satisfy specific and contingent requirements, variants and modifications which are still within the scope of protection as defined by the following claims.

## Claims

1. Tyre (1) for vehicle wheels, having a tread band (10) comprising an annular central portion (10i) astride an equatorial plane (Y-Y) and two annular shoulder portions (10ii) arranged on axially opposite sides with respect to the annular central portion (10i), the annular central portion (10i) being separated from each annular shoulder portion (10ii) by a respective circumferential groove (16), wherein the annular central portion (10i) comprises a plurality of blocks (20) arranged along at least one circumferential row (21) comprised between two circumferential grooves (16), and at least one transversal sipe (30) adapted to define two circumferentially consecutive blocks (20), wherein the transversal sipe (30) has a main surface (301) orientated in a substantially radial direction and provided with at least one deformation (302) defining, in the adjacent blocks (20), respective portions of mutual constraint, wherein said deformation (302) comprises at least two undercut portions (304) in a circumferential direction, **characterised in that** the axial distance between the two undercut portions (304) reduces moving from the radially outer end towards the radially inner end of the sipe (30).

2. Tyre (1) according to claim 1, wherein the main surface (301) is flat.

3. Tyre (1) according to claim 1, wherein the deformation (302) extends axially in a central area (303) of the sipe (30).

4. Tyre (1) according to any one of the previous claims, wherein said deformation (302) extends radially in a central area (303) of the sipe (30).

5. Tyre (1) according to claim 4, wherein said deformation (302) extends radially along the entire radial extension of the sipe (30).

6. Tyre (1) according to any one of the previous claims, wherein said at least two undercut portions (304) are defined by a substantially S-shaped surface portion (T).

7. Tyre (1) according to any one of the previous claims1, wherein said at least two undercut portions (304) extend from opposite sides with respect to a plane (M) perpendicular to a transversal plane (V) of the sipe (30).

8. Tyre (1) according to claim 7, wherein said at least two undercut portions (304) are symmetrically arranged with respect to said plane (M) perpendicular to the transversal plane (V) of the sipe (30).

9. Tyre (1) according to any one of the previous claims, wherein said at least two undercut portions (304) extend radially along the entire radial extension of the sipe (30).

10. Tyre (1) according to any one of claims 7 to 9, wherein the two undercut portions (304) are connected to each other by a flat surface portion (307).

11. Tyre (1) according to claim 10, wherein the flat surface portion (307) has the same circumferential distance from the main surface (301) of the sipe (30) moving from a radially outer end towards a radially inner end of the sipe (30).

12. Tyre (1) according to claim 10, wherein the circumferential distance between the flat surface portion (307) and the main surface (301) of the sipe (30) reduces moving from a radially outer end towards a radially inner end of the sipe (30).

13. Tyre (1) according to any one of the previous claims, wherein the deformations (302) of two consecutive sipes (30) of said at least one circumferential row (21) are orientated in the same way along a circumferential direction.

14. Tyre (1) according to any one of the previous claims, comprising at least two circumferential rows (21) of blocks (20) in said central annular portion (10i), said at least two circumferential rows (21) of blocks (20) being axially separated by a circumferential sipe (22).

15. Tyre (1) according to claim 14, comprising a first circumferential groove (15) astride said equatorial plane (Y-Y) and two second circumferential grooves (16) arranged on axially opposite sides with respect to the first circumferential groove (15), said at least two circumferential rows (21) of blocks (20) being arranged between the first circumferential groove (15) and each of the second circumferential grooves (16).

16. Tyre (1) according to any one of the previous claims, wherein the blocks (20) of said at least one circumferential row (21) are grouped together, each group being separated from the circumferentially consecutive group by a respective transversal groove (23).

17. Tyre (1) according to claim 16, wherein the blocks (20) are elongated in the axial direction.

18. Tyre (1) according to claim 16 or 17 when depending on claim 15, wherein the groups of blocks (20) of a circumferential row (21) are at offset circumferential positions with respect to the groups of blocks (20) of the axially adjacent circumferential row (21).

19. Tyre (1) according to any one of claims 1 to 15, comprising a transversal sipe (30) between each block (20) of said at least one circumferential row (21) and the circumferentially consecutive block (20).

20. Tyre (1) according to claim 19, wherein the blocks (20) are elongated in the circumferential direction.

21. Tyre (1) according to claim 19 or 20 when depending on claim 15, wherein the blocks (20) of a circumferential row (21) are at offset circumferential positions with respect to the blocks (20) of the axially adjacent circumferential row (21).

22. Tyre (1) according to any one of the previous claims, wherein each of the two annular shoulder portions (10ii) comprises sipes (35,60) of identical shape to, and of different sizes from, the sipes (30) of the central annular portion (10i) of the tread band (10).

## Patentansprüche

1. Reifen (1) für Fahrzeugräder mit einem Laufflächenband (10) mit einem ringförmigen zentralen Abschnitt (10i) rittlings zu einer Äquatorebene (Y-Y) und zwei ringförmigen Schulterabschnitten (10ii), die an axial gegenüberliegenden Seiten bezüglich dem ringförmigen zentralen Abschnitt (10i) angeordnet sind, wobei der ringförmige zentrale Abschnitt (10i) von jedem ringförmigen Schulterabschnitt (10ii) durch eine jeweilige Umfangsnut (16) getrennt ist, wobei der ringförmige zentrale Abschnitt (10i) mehrere Blöcke (20), die entlang wenigstens einer Umfangsreihe (21) zwischen zwei Umfangsnuten (16) angeordnet sind, und wenigstens einen Querfeineinschnitt (30) aufweist, der dafür angepasst ist, zwei umfänglich folgende Blöcke (20) zu definieren, wobei der Querfeineinschnitt (30) eine Hauptoberfläche (301) aufweist, die in einer im Wesentlichen radialen Richtung gerichtet ist, und er mit wenigstens einer Verformung (302) versehen ist, die in den benachbarten Blöcken (320) jeweilige Abschnitte der wechselseitigen Beschränkung definiert, wobei die Verformung (302) wenigstens zwei hinterschnittene Abschnitte (304) in einer Umfangsrichtung aufweist, **dadurch gekennzeichnet, dass** sich der axiale Abstand zwischen den zwei hinterschnittenen Abschnitten (304) verringert, wenn man sich vom radial äußeren Ende zum radial inneren Ende des Feineinschnitts (30) bewegt.

2. Reifen (1) nach Anspruch 1, bei dem die Hauptoberfläche (301) flach ist.

3. Reifen (1) nach Anspruch 1, bei dem sich die Deformation (302) in einer zentralen Fläche (303) des Feineinschnitts (30) axial erstreckt.

4. Reifen (1) nach einem der vorhergehenden Ansprüche, bei dem sich die Verformung (302) in einer zentralen Fläche (303) des Feineinschnitts (30) radial erstreckt.

5. Reifen (1) nach Anspruch 4, bei dem sich die Verformung (302) radial entlang der gesamten radialen Erstreckung des Feineinschnitts (30) erstreckt.

6. Reifen (1) nach einem der vorhergehenden Ansprüche, bei dem die wenigstens zwei hinterschnittenen Abschnitte (304) durch einen im Wesentlichen S-förmigen Oberflächenabschnitt (T) definiert sind.

7. Reifen (1) nach einem der vorhergehenden Ansprüche, bei dem sich die wenigstens zwei hinterschnittenen Abschnitte (304) von gegenüberliegenden Seiten bezüglich einer Ebene (M) senkrecht zu einer Querebene (V) des Feineinschnitts (30) erstrecken.

8. Reifen (1) nach Anspruch 7, bei dem die wenigstens zwei hinterschnittenen Abschnitte (304) symmetrisch bezüglich der Ebene (M) angeordnet sind, die senkrecht zu der Querebene (V) des Feineinschnitts (30) ist.

9. Reifen (1) nach einem der vorhergehenden Ansprüche, bei dem sich die wenigstens zwei hinterschnittenen Abschnitte (304) radial entlang der gesamten radialen Erstreckung des Feineinschnitts (30) erstrecken.

10. Reifen (1) nach einem der Ansprüche 7 bis 9, bei dem die wenigstens zwei hinterschnittenen Abschnitte (304) miteinander durch einen flachen Oberflächenabschnitt (307) verbunden sind.

11. Reifen (1) nach Anspruch 10, bei dem der flache Oberflächenabschnitt (307) den gleichen umfänglichen Abstand von der Hauptoberfläche (301) des Feineinschnitts (30) aufweist, wenn man sich von einem radial äußeren Ende zu einem radial inneren Ende des Feineinschnitts (30) bewegt.

12. Reifen (1) nach Anspruch 10, bei dem sich der umfängliche Abstand zwischen dem flachen Oberflächenabschnitt (307) und der Hauptoberfläche (301) des Feineinschnitts (30) verringert, wenn man sich von einem radial äußeren Ende zu einem radial inneren Ende des Feineinschnitts (30) bewegt.

13. Reifen (1) nach einem der vorhergehenden Ansprüche, bei dem die Verformungen (302) zweier folgender Feineinschnitte (30) der wenigstens einen Umfangsreihe (21) in der gleichen Weise entlang einer Umfangsrichtung ausgerichtet sind.

14. Reifen (1) nach einem der vorhergehenden Ansprüche, mit wenigstens zwei Umfangsreihen (21) an Blöcken (20) in dem zentralen ringförmigen Abschnitt (10i), wobei die wenigstens zwei Umfangsreihen (21) an Blöcken (20) axial durch einen Umfangsfeineinschnitt (22) getrennt sind.

15. Reifen (1) nach Anspruch 14, mit einer ersten Umfangsnut (15) rittlings zu der Äquatorebene (Y-Y) und mit zwei zweiten Umfangsnuten (16), die an axial gegenüberliegenden Seiten bezüglich der ersten Umfangsnut (15) angeordnet sind, wobei die wenigstens zwei Umfangsreihen (21) an Blöcken (20) zwischen der ersten Umfangsnut (15) und jeder zweiten Umfangsnut (16) angeordnet sind.

16. Reifen (1) nach einem der vorhergehenden Ansprüche, bei dem die Blöcke (20) der wenigstens einen Umfangsreihe (21) zusammen gruppiert sind, wobei jede Gruppe von der umfänglich folgenden Gruppe durch eine jeweilige Quernut (23) getrennt ist.

17. Reifen (1) nach Anspruch 16, bei dem die Blöcke (20) in der Axialrichtung länglich sind.

18. Reifen (1) nach Anspruch 16 oder 17, sofern von Anspruch 15 abhängig, bei dem die Gruppen an Blöcken (20) einer Umfangsreihe (21) an umfänglich versetzten Positionen bezüglich den Gruppen an Blöcken (20) der axial benachbarten Umfangsreihe (21) sind.

19. Reifen (1) nach einem Ansprüche 1 bis 15, mit einem Querfeineinschnitt (30) zwischen jedem Block (20) der wenigstens einen Umfangsreihe (21) und dem entlang des Umfangs folgenden Block (20).

20. Reifen (1) nach Anspruch 19, bei dem die Blöcke (20) in der Umfangsrichtung länglich sind.

21. Reifen (1) nach Anspruch 19 oder 20, sofern von Anspruch 15 abhängig, bei dem die Blöcke (20) einer Umfangsreihe (21) an versetzten Umfangspositionen bezüglich der Blöcke (20) der axial benachbarten Umfangsreihe (21) sind.

22. Reifen (1) nach einem der vorhergehenden Ansprüche, bei dem jeder der zwei ringförmigen Schulterabschnitte (10ii) Feineinschnitte (35, 60) von identischer Form mit und verschiedenen Größen von den Feineinschnitten (30) des zentralen ringförmigen Abschnitts (10i) des Laufflächenbands (10) aufweist.

## Revendications

1. Pneu (1) pour roues de véhicules, ayant une bande de roulement (10) comprenant une partie centrale annulaire (10i) à cheval sur un plan équatorial (Y-Y) et deux parties d'épaulement annulaires (10ii) agencées sur des bords axialement opposés par rapport à la partie centrale annulaire (10i), la partie centrale annulaire (10i) étant séparée de chacune des parties d'épaulement annulaires (10ii) par une rainure circonférentielle respective (16), dans lequel la partie centrale annulaire (10i) comprend plusieurs blocs (20) agencés le long d'au moins une rangée circonférentielle (21) comprise entre deux rainures circonférentielles (16), et au moins une lamelle transversale (30) agencée pour définir deux blocs circonférentiellement consécutifs (20), dans lequel la lamelle transversale (30) a une surface principale (301) orientée dans une direction sensiblement radiale et pourvue d'au moins une déformation (302) définissant, dans les blocs adjacents (20), des parties respectives de contrainte mutuelle, dans lequel ladite déformation (302) comprend au moins deux parties en contre-dépouille (304) dans une direction circonférentielle, **caractérisé en ce que** la distance axiale entre les parties en contre-dépouille (304) diminue en allant de l'extrémité radialement externe vers l'extrémité radialement interne de la lamelle (30).

2. Pneu (1) selon la revendication 1, dans lequel la surface principale (301) est plate.

3. Pneu (1) selon la revendication 1, dans lequel la déformation (302) s'étend axialement dans une aire centrale (303) de la lamelle (30).

4. Pneu (1) selon l'une quelconque des revendications précédentes, dans lequel ladite déformation (302) s'étend radialement dans une aire centrale (303) de la lamelle (30).

5. Pneu (1) selon la revendication 4, dans lequel ladite déformation (302) s'étend radialement le long de toute l'étendue radiale de la lamelle (30).

6. Pneu (1) selon l'une quelconque des revendications précédentes, dans lequel lesdites au moins deux parties en contre-dépouille (304) sont définies par une partie de surface (T) sensiblement en forme de S.

7. Pneu (1) selon l'une quelconque des revendications précédentes, dans lequel lesdites au moins deux parties en contre-dépouille (304) s'étendent depuis des bords opposés par rapport à un plan (M) perpendiculaire à un plan transversal (V) de la lamelle (30).

8. Pneu (1) selon la revendication 7, dans lequel lesdites au moins deux parties en contre-dépouille (304) sont agencées symétriquement par rapport audit plan (M) perpendiculaire au plan transversal (V) de la lamelle (30).

9. Pneu (1) selon l'une quelconque des revendications précédentes, dans lequel lesdites au moins deux parties en contre-dépouille (304) s'étendent radialement le long de toute l'étendue radiale de la lamelle (30).

10. Pneu (1) selon l'une quelconque des revendications 7 à 9, dans lequel lesdites au moins deux parties en contre-dépouille (304) sont reliées l'une à l'autre par une partie de surface plate (307).

11. Pneu (1) selon la revendication 10, dans lequel la partie de surface plate (307) est à la même distance circonférentielle de la surface principale (301) de la lamelle (30) lorsqu'on va d'une extrémité radialement externe vers une extrémité radialement interne de la lamelle (30).

12. Pneu (1) selon la revendication 10, dans lequel la distance circonférentielle entre la partie de surface plate (307) et la surface principale (301) de la lamelle (30) diminue en allant d'une extrémité radialement externe vers une extrémité radialement interne de la lamelle (30).

13. Pneu (1) selon l'une quelconque des revendications précédentes dans lequel les déformations (302) de deux lamelles consécutives (30) de ladite au moins un rangée circonférentielle (21) sont orientées de la même manière le long d'une direction circonférentielle.

14. Pneu (1) selon l'une quelconque des revendications précédentes, comprenant au moins deux rangées circonférentielles (21) de blocs (20) dans ladite partie annulaire centrale (10i), lesdites au moins deux rangées circonférentielles (21) de blocs (20) étant séparées axialement par une lamelle circonférentielle.

15. Pneu (1) selon la revendication 14, comprenant une première rainure circonférentielle (15) à cheval sur ledit plan équatorial (Y-Y) et deux deuxièmes rainures circonférentielles (16) agencées sur des côtés axialement opposés par rapport à la première rainure circonférentielle (15), lesdites au moins deux rangées circonférentielles étant agencées entre la première rainure circonférentielle (15) et chacune des deuxièmes rainures circonférentielles (16).

16. Pneu (1) selon l'une quelconque des revendications précédentes, dans lequel les blocs (20) de ladite au moins une rainure circonférentielle (21) sont regroupés ensemble, chaque groupe étant séparé du groupe circonférentiellement consécutif par une rainure transversale respective.

17. Pneu (1) selon la revendication 16, dans lequel les blocs (20) sont allongés dans la direction axiale.

18. Pneu (1) selon la revendication 16 ou 17 lorsque dépendante de la revendication 15, dans lequel les groupes de blocs (20) d'une rangée circonférentielle (21) sont en des positions circonférentielles décalées par rapport aux groupes de blocs (20) de la rangée circonférentielle axialement adjacente (21).

19. Pneu (1) selon l'une quelconque des revendications 1 à 15, comprenant une lamelle transversal (30) entre chaque bloc (20) de ladite au moins une rangée circonférentielle (21) et le bloc circonférentiellement consécutif (20).

20. Pneu (1) selon la revendication 19, dans lequel les blocs (20) sont allongés dans la direction circonférentielle.

21. Pneu (1) selon la revendication 19 ou 20 lorsque dépendante de la revendication 15, dans lequel les blocs (20) d'une rangée circonférentielle (21) sont en des positions circonférentielles décalées par rapport aux blocs (20) de la rangée axialement adjacente (21).

22. Pneu (1) selon l'une quelconque des revendications précédentes, dans lequel chacune des deux partie d'épaulement annulaires (10ii) comprend des lamelles (35, 60) de forme identique à et de tailles différentes des, lamelles (30) de la partie annulaire centrale (10i) de la bande de roulement (10).
